# EUROPEAN PATENT SPECIFICATION

(11) **EP 2 525 986 B1**
(45) Date of publication and mention of the grant of the patent: **07.08.2013**
(21) Application number: 10795296.2
(22) Date of filing: 10.12.2010
(51) Int. Cl.: B60B 21/06, B60B 5/02

(54) **A BICYCLE WHEEL RIM HAVING SIDEWARDLY OPENING TWO-PART SLIT SHAPED SPOKE MOUNTING APERTURES**
FAHRADFELGE MIT SEITENÖFFNUNGEN IN FORM EINES ZWEITEILIGEN SCHLITZES ZUR MONTAGE VON SPEICHEN
JANTE POUR VELO AVEC DES OUVERTURES LATERALES EN FORME D'UNE FENTE EN DEUX PARTIES POUR L'INSTALLATION DES RAYONS

(30) Priority: 21.01.2010 NL 2004125
(43) Date of publication of application: 28.11.2012
(73) Proprietor: 3T Design Limited, Hong Kong (CN)
(72) Inventor: MCAINSH, Richard, I-24030 Villa D'adda BG (IT)
(74) Representative: Riemens, Roelof Harm
(86) International application number: PCT/EP2010/069410
(87) International publication number: WO 2011/088932

(56) References cited:
- EP-A2- 1 068 964
- FR-A1- 2 526 374
- US-A1- 2007 188 011
- US-B1- 6 364 423

## Description

The invention relates to a bicycle wheel rim construction, and in particular to the shape of spoke mounting apertures provided therein.

Conventional bicycle wheels comprise an annular wheel rim, a central hub and a number of spokes connecting them with each other. The spokes are usually thin metal rounded wire spokes with a thread on one end and a J-shaped hook with a head on the other end. In the most common configurations, the spokes have first been inserted in openings in flanges of the hub until their hook with thickened head abuts against the hub flange. Threaded nipples are installed in corresponding holes in the rim. The nipples are connected with the threaded spoke ends and the spokes are subsequently tensioned by rotation of the nipples.

A disadvantage with this conventional wheel, in particular if it has a deep carbon rim profile, is that, being the lower side of the nipple larger than the spoke, the hole in the rim has to be larger than the diameter of the spoke. This weakens the structural strength of the rim. Also the nipple holes in the rim lead to high concentrated stresses applied to the surrounding rim walls and the weight of the nipples at the rim increase the angular inertia of the wheel and its resistance to acceleration. Further, the spokes frequently tend to break at the location of their J-shaped hook.

It has been tried to solve these problems by reversing the spokes and at the same time making them fully straight. For example US-5,810,453 shows an embodiment in which the spokes have been inserted through central openings in the annular bottom rim wall, against which they are abutting with a thickened head while their spoke shafts hang freely downwardly. Nipples here are seated in flange openings of the hub. The openings in the rim can now be manufactured smaller and the straight spokes break less easily.

Nevertheless, some problems connected to manufacturing and/or load transfer still remain with this reversed spoke construction. For example, it is necessary to remove the wheel tire when one of the spokes needs to be replaced. Also, the rim construction needs internal strengthening walls diverging towards the central openings in the bottom wall of the rim. This increases the weight of the rim.

US 2003/0209936 shows a wheel rim construction in which the rim is provided with rectangular transverse apertures through which thickened complementary rectangular spoke heads can be inserted. Subsequently each spoke can be rotated 90 degrees so as to fix the rectangular head part between upstanding groove walls which are provided inside an annular hollow chamber of the wheel rim. With this construction the tyre no longer needs to be removed when one of the spokes needs to be replaced.

A disadvantage with this is that the rim construction is difficult to manufacture, in particular because of the provision of its annular hollow chamber and annular groove walls upstanding therein. Furthermore, the rectangular transverse apertures are weakening the rim, and the rim still has a relative high angular inertia.

The generic FR-2 526 374 shows a bicycle wheel rim having a radially inwardly projecting spoke mounting flange. This rim mounting flange is provided with keyhole-shaped openings. Each keyhole-shaped opening comprises a large upper keyhole part and a more slender lower keyhole part. Thus a J-shaped spoke with a thickened head on its hooked outer end can be inserted sideways into the large upper keyhole part and then be pulled radially downwards into the more slender lower keyhole part. In this position the thickened head of the spoke gets trapped by being delimited by wall parts of the flange surrounding the more slender lower keyhole part.

A disadvantage with this known construction is that the two keyhole parts are only open in the sideways direction. In the radial inward direction, that is to say towards the central axis of the rim, the keyhole parts are closed. This makes it necessary to use spokes with hooked end parts.

IT-VR-20020034 shows a bicycle wheel rim comprising an outer annular profile which defines an annular seat for a tyre. The rim further comprises an outer annular chamber and an inner annular chamber. The bottom and side walls of the inner annular chamber together define a plurality of insertion openings each for receiving a nipple for fastening a threaded end of a spoke to the rim. Each opening comprises a large upper opening part in one of the side walls and a more slender lower opening part in the bottom wall of the chamber. The nipple can be inserted sideways into the rim with a thick head part passing the large upper opening part and a slender shaft part passing the more slender lower opening part. Subsequently the nipple can be pulled downwards until the thick head part abuts against the bottom wall of the rim.

A disadvantage with this known rim construction is that it is difficult and expensive to manufacture as a one-piece integral object.

The present invention aims to overcome one or more of the above-mentioned disadvantages, or to at least provide a usable alternative. In particular, the inventions aims to provide a user-friendly bicycle wheel rim with optimal performance behaviour because it combines a lightweight construction with a high strength.

This aim is achieved by a bicycle wheel rim according to claim 1. The rim comprises a wall with two opposite radially outwardly extending annular sidewall parts. In the rim wall a plurality of spoke mounting apertures are provided. A plurality of spokes is provided which comprise a slender shaft with a widened head. The head is provided at one of the outer ends of the shaft and has a larger cross section than the shaft. The spoke mounting apertures are delimited by wall parts of the rim, which wall parts form seats for the heads of the spokes to abut against when mounted in the spoke mounting apertures with their spoke shafts extending radially inwardly. At least one of the spoke mounting apertures is formed by a slit that extends both in a transverse sideward and radial outward direction. The slit comprises a slender first slit part and a widened second slit part. The first slit part has cross sectional dimensions lying between the cross sectional dimensions of the spoke shaft and the spoke head, in particular slightly larger than the shaft, such that the shaft can freely be placed into and removed from this first slit part whereas the head is blocked by it. The second slit part has cross sectional dimensions larger than the cross sectional dimensions of the spoke head, in particular slightly larger than the head, such that the head can be placed into and removed from this second slit part. The second slit part lies further radially outward than the first slit part. The slit parts are both open in the direction of the central axis of the rim and in the direction of at least one of the sidewall parts of the rim. This makes it possible to insert the spoke into the slit coming from the side of the respective sidewall part, and to then simply slide the spoke with its head towards its abutting mounting position. The rim construction with its sidewardly approachable two-part slits according to the invention makes the assembly of a bicycle wheel using such a rim much more user-friendly. The manufacturing complexity of the rim has become easier, particularly if it is made of carbon, and it is possible to use less material for the rim while maintaining enough strength.

It is possible for the heads of the spokes to be formed by nipples screwed onto the shafts. Preferably however the heads of the spokes have been made integral with the shafts. This has the advantage that the integral heads may have a lighter weight then the nipples which helps in reducing the angular inertia of the wheel. In an embodiment the heads have been made rotation symmetric such that it makes no difference in whatever rotational position they are to be slid into their respective slits.

Also it is possible for the spokes to still have a hooked end part, either at the location of their connections with the hub either at the location of their heads. Preferably however straight spokes are used. Neither the connection with the rim neither the connection with the hub needs a hooked end part. This makes the spokes stronger and/or makes it possible to construct them more lightweight.

The side wall parts of the rim may be directly connected to each other from where they diverge radially outwards in order to delimit a V-shaped annular space. It is also possible that a bottom wall is provided which connects the side wall parts which each other in order to together delimit a U-shaped annular space.

According to the invention the rim wall at the location of the slit parts is provided with strengthening wall parts, which extend into the internal annular space of the rim. With this there will be an increasing stiffness, the loads will be better shared on the rim walls, and the rim will be no more be subjected to high concentrated stresses.

In a further embodiment the strengthening wall parts, which delimit the slit parts towards the internal annular space, form a closed pocket in the rim wall. No holes have to be drilled into the rim wall for being able to provide the two-part slits. They can be formed as indents in the rim wall. The strengthening wall parts, which delimit the slit parts towards the internal annular space can advantageously be manufactured integral with the rest of the rim wall. Particularly if the rim is made out of a moulded composite material, in particular a carbon fibre reinforced material, this strongly reduces the manufacturing complexity and the strength of the rim. All in all the two-part slit pockets and the sliding positioning of the spoke heads coming from the sideward direction in these pockets helps in keeping the angular inertia of the wheel rather low and thus to give it a low resistance to acceleration. The abutting seats of the spokes in the rim pockets aid in ensuring a better load transfer between the spoke head and the rim.

Further advantageous embodiments are stated in the subclaims.

The invention also relates to a bicycle wheel according to claim 9 and a bicycle according to claim 10 making use of the advantageous wheel rim.

The invention shall be dealt with in further detail below with reference to the accompanying drawings, wherein:
Fig. 1 is a perspective partial view of a bicycle wheel embodiment according to the invention;
Fig. 2 shows a side view of fig. 1;
Fig. 3 shows detail B of fig. 2 in an enlarged view;
Fig. 4 shows the rim of fig. 1 without spokes connected thereto;
Fig. 5 shows a partial side view of fig. 4; and
Fig. 6 shows the cross section V-V of fig. 5.

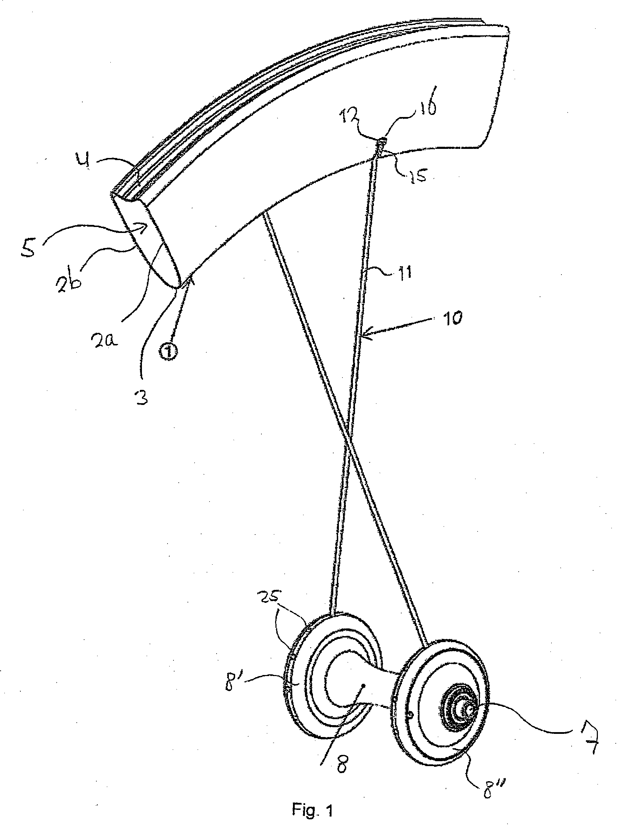

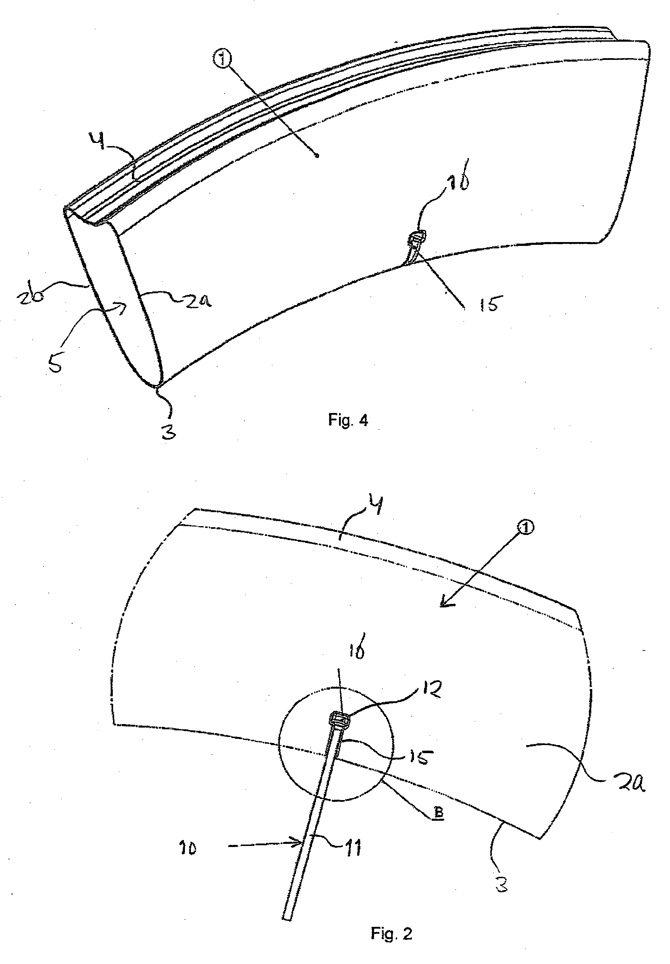

In fig. 1-6 the annular wheel rim has been indicated with the reference numeral 1. Only a small circle segment of the rim 1 has been shown. The rim 1 here comprises two opposite radially outwardly extending annular sidewall parts 2a, 2b, a radial inward bottom wall part 3 and a radial outward tyre support wall part 4. The wall parts 2, 3, 4, seen in cross section, form a circumferentially closed wall inside which an internal hollow space 5 is present. Like the rim 1 and the wall parts 2, 3, 4 itself, the internal hollow space 5 runs like an annulus around a central axis of rotation 7.

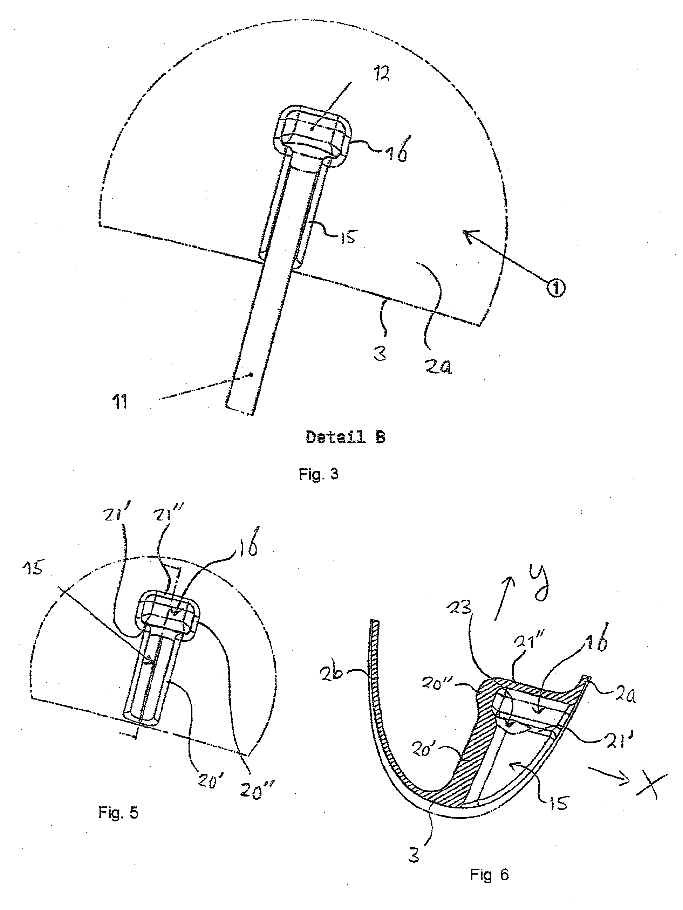

The rim 1 is connected to a central hub 8 by means of a plurality of spokes 10 of which only two are shown. Each spoke 10 comprises a longitudinal shaft 11 with an integral head 12 at its radial outward end (see fig. 3). The head 12 has a larger cross section than the shaft 11. In particular the head 12 has a width/thickness (cross sectional dimension) which is at least one and a half times larger than the width/thickness (cross sectional dimension) of the shaft 11.

In the rim wall, and in particular in the side wall parts 2a, 2b thereof, a plurality of slit shaped spoke mounting apertures are provided. The apertures are equally divided around the circumference of the rim 1. Adjacent spoke mounting apertures are provided alternating in the two side wall parts 2a, 2b and thus open towards opposite sideward directions. As can be seen in fig 5 and 6, each slit extends both in a transverse sideward direction X and in a radial outward direction Y. Furthermore each slit comprises a first slit part 15 and a second slit part 16. The first slit part 15 starts near the centre of the bottom wall part 3 and from there runs sideward and outward in the directions X and Y. The second slit part 16 extends above the entire radial outward side of the first slit part 15. The first slit part 15 is open in the directions - Y towards the central axis of rotation 7 and +X towards the sidewall part 2a in which it is provided. The second slit part 16 is open in the direction -Y towards the first slit part 15 below it and +X towards the sidewall part 2a in which it is provided. The first slit part 15 has cross sectional dimensions slightly larger than the shaft 11 and substantially smaller than the head 12. The second slit part 16 has cross sectional dimensions slightly larger than the head 12. In side view, the two slit parts 15, 16 delimit a T-shape which is substantially complementary to the upper part of the spoke 10.

The slit parts 15, 16 of each slit are delimited by so-called standing strengthening wall parts 20', 20" extending in the radial direction Y and so-called lying strengthening wall parts 21', 21" extending in the sideward direction X. Together these standing and lying strengthening wall parts 20, 21 form a closed pocket around the slit which pocket extends inwardly into the internal annular space 5 of the rim 1. The strengthening wall parts 20, 21 are manufactured integral with the rest of the rim wall. The lying strengthening wall parts 21' extending between the transition of the first and second slit part 15, 16 form a seat 23 for the head 12 of the spoke 10 to abut against while the spoke shaft 11 extends through the first slit part 15 in the direction of the central axis 7. The closed pockets have the large advantage that the rim wall can maintain continuous even at the location of the spoke mounting apertures. The drilling of holes in the rim wall is not necessary for making the slits.

During assembly each spoke 10 may simply be pushed with its head 12 and upper shaft part 11 into one of the two-part slits, until they reach their seated end position in there. The spokes 10 are then connected with their free ends with the hub 8 and brought to a desired tension. For this the free spoke ends are provided with screw threaded end parts. The hub 8 may be provided with nipple openings 25 in opposite flanges 8', 8" of the hub 8, into which openings 25 threaded nipples are placed. In the alternative it is also possible to first connect the spokes 10 with the hub 8, to then push the spoke heads 12 sidewards into the slits 15, 16, and to then tension the spokes 10. Advantageously in both of the two assembly assembly methods, the spokes 10 do not have to be bend or otherwise deformed to be able to connect them with the rim 1 and hub 8. Also the spokes 10 can advantageously be made fully straight with one common longitudinal axis.

Besides the embodiment shown numerous variants are possible. For example the rim and the slit shaped apertures therein may be given other shapes and dimensions. It is also possible to provide the hub directly with threaded holes into which spoke ends can be screwed or to connect the spokes with hooked and/or thickened end parts with the hub. The head of the spoke may even be formed by a nipple. This makes it possible to use the rim according to the invention in combination with all kinds of hubs and with or without 'reversed' spokes. The rim can be made out of various kinds of materials, for example metal. Preferably, however the rim is made out of a moulded composite material, in particular a carbon fibre reinforced material. The construction with the closed pockets makes the rim very suitable to be made out of such a moulded composite material. The slit parts shown extend in a sideward direction substantially perpendicular to the sidewall parts. In the alternative it is also possible to have them extend under an oblique angle to these sidewall parts.

Thus a bicycle wheel rim is provided which aids in making a bicycle lightweight, strong and fast during accelerations. In particular during racing where the demands are high, this may make a critical positive difference.

## Claims

1. A bicycle wheel rim (1) having a central axis of rotation (7), comprising:
- a wall with two opposite radially outwardly extending annular sidewall parts (2a, 2b);
- a plurality of spoke mounting apertures in the wall;
- a plurality of spokes (10) destined for connecting the rim (1) with a central hub (8);
in which the spokes (10) comprise a shaft (11) with a head (12) at its radially outward end, which head (12) has a larger cross section than the shaft (11),
in which wall parts of the rim (1) that are delimiting the spoke mounting apertures form seats for the heads (12) of the spokes (10) to abut against while the spoke shafts (11) extend through the apertures in the direction of said central axis (7),
at least one of the spoke mounting apertures is formed by a slit,
said slit extends both in a sideward and radial outward direction (X resp. Y) and comprises a first slit part (15) and a second slit part (16), wherein the first slit part (15) has cross sectional dimensions lying between the cross sectional dimensions of the shaft (11) and the head (12), and the second slit part (16) has cross sectional dimensions larger than the cross sectional dimensions of the head (12),
wherein the second slit part (16) lies further radially outward than the first slit part (15), and wherein the slit parts (15, 16) are both open in the direction of the central axis (7) of the rim (1) and in the direction of at least one of the sidewall parts (2a, 2b) of the rim (1),
**characterized in that,**
said wall parts of the rim (1) are provided with strengthening wall parts (20, 21), which delimit the slit parts (15, 16) towards an internal annular space (5) of the rim (1).

2. Bicycle wheel rim according to claim 1, wherein the strengthening wall parts (20, 21), which delimit the slit parts (15, 16) towards the internal annular space (5), form a closed pocket in the rim wall.

3. Bicycle wheel rim according to claim 1 or 2, wherein the strengthening wall parts (20, 21), which delimit the slit parts (15, 16) towards the internal annular space (5) are manufactured integral with the rim wall.

4. Bicycle wheel rim according to one of the preceding claims, wherein the strengthening wall parts (20, 21), which delimit the slit parts (15, 16) comprise standing strengthening wall parts (20', 20") extending in the radial direction (Y) and lying strengthening wall parts (21', 21 ") extending in the sideward direction (X).

5. Bicycle wheel rim according to one of the preceding claims, wherein the second slit part (16) fully extends in the sideward direction (X) and has wall parts (21') delimiting its radial inward side forming the seat (23) for the head (12) of the spoke (10) to abut against while the spoke shaft (11) extends through the first slit part (15) in the direction of said central axis (7).

6. Bicycle wheel rim according to one of the preceding claims, wherein the slit being open in the direction of at least one of the sidewall parts (2a, 2b) of the rim (1), is open in a sideward direction perpendicular to the sidewall parts (2a, 2b).

7. Bicycle wheel rim according to one of the preceding claims, wherein adjacent spoke mounting apertures have their slits open towards opposite sideward directions.

8. Bicycle wheel rim according to one of the preceding claims, wherein the rim (1) is made out of a moulded composite material, in particular a carbon fibre reinforced material.

9. Bicycle wheel comprising:
- a central hub (8) having flanges (8', 8") with a plurality of spoke mounting openings (25) therein;
- a bicycle wheel rim (1) according to one of the preceding claims having its spokes (10) connecting the hub (8) and the rim (1) with each other; and
- a plurality of nipples for providing adjustment of tension in the spokes (10).

10. Bicycle comprising at least one bicycle wheel rim (1) according to one of the preceding claims.

## Patentansprüche

1. Fahrradradfelge (1) mit einer zentralen Drehachse (7), umfassend:
- eine Wand mit zwei gegenüberliegenden ringförmigen sich radial nach außen erstreckenden Seitenwandteilen (2a, 2b);
- mehrere Speichenbefestigungsöffnungen in der Wand;
- mehrere Speichen (10), welche zum Verbinden der Felge (1) mit einer zentralen Nabe (8) vorgesehen sind;
wobei die Speichen (10) einen Schaft (11) mit einem Kopf (12) an ihrem radial äußeren Ende umfassen, wobei der Kopf (12) einen größeren Querschnitt als der Schaft (11) aufweist,
wobei Wandteile der Felge (1), welche die Speichenbefestigungsöffnungen begrenzen, Sitze für die Köpfe (12) der Speichen (10) bilden, um daran anzuliegen, während sich die Speichenschäfte (11) durch die Öffnungen in Richtung der zentralen Achse (7) erstrecken,
wobei mindestens eine der Speichenbefestigungsöffnungen durch einen Schlitz ausgebildet ist,
wobei sich der Schlitz sowohl in einer seitlichen als auch einer radialen Außenrichtung (X bzw. Y) erstreckt und einen ersten Schlitzteil (15) und einen zweiten Schlitzteil (16) umfasst, wobei der erste Schlitzteil (15) Querschnittsabmessungen aufweist, welche zwischen den Querschnittsabmessungen des Schafts (11) und des Kopfes (12) liegen, und wobei der zweite Schlitzteil (16) Querschnittsabmessungen größer als die Querschnittsabmessungen des Kopfes (12) aufweist,
wobei der zweite Schlitzteil (16) weiter radial außen als der erste Schlitzteil (15) liegt, und wobei die Schlitzteile (15, 16) beide offen in Richtung der zentralen Achse (7) der Felge (1) und in der Richtung von mindestens einer der Seitenwandteile (2a, 2b) der Felge (1) sind,
**dadurch gekennzeichnet, dass**
die Wandteile der Felge (1) mit verstärkenden Wandteilen (20, 21) versehen sind, welche die Schlitzteile (15, 16) in Richtung eines inneren ringförmigen Raums (5) der Felge (1) begrenzen.

2. Fahrradradfelge nach Anspruch 1, wobei die verstärkenden Wandteile (20, 21), welche die Schlitzteile (15, 16) in Richtung des inneren ringförmigen Raums (5) begrenzen, eine geschlossene Tasche in der Felgenwand bilden.

3. Fahrradradfelge nach Anspruch 1 oder 2, wobei die verstärkenden Wandteile (20, 21), welche die Schlitzteile (15, 16) in Richtung des inneren ringförmigen Raums (5) begrenzen, integriert mit der Felgenwand hergestellt sind.

4. Fahrradradfelge nach einem der vorhergehenden Ansprüche, wobei die verstärkenden Wandteile (20, 21), welche die Schlitzteile (15, 16) begrenzen, stehende verstärkende Wandteile (20', 20"), welche sich in der radialen Richtung (Y) erstrecken, und liegende verstärkende Wandteile (21', 21"), welche sich in der seitlichen Richtung (X) erstrecken, umfassen.

5. Fahrradradfelge nach einem der vorhergehenden Ansprüche, wobei sich der zweite Schlitzteil (16) vollständig in der seitlichen Richtung (X) erstreckt und Wandteile (21') aufweist, welche seine radiale Einwärtsseite begrenzen, welche den Sitz (23) für den Kopf (12) der Speiche (10) bildet, um daran anzuliegen, während sich der Speichenschaft (11) durch den ersten Schlitzteil (15) in Richtung der zentralen Achse (7) erstreckt.

6. Fahrradradfelge nach einem der vorhergehenden Ansprüche, wobei der Schlitz, welcher in der Richtung von mindestens einem der Seitenwandteile (2a, 2b) der Felge (1) offen ist, in einer seitlichen Richtung senkrecht zu den Seitenwandteilen (2a, 2b) offen ist.

7. Fahrradradfelge nach einem der vorhergehenden Ansprüche, wobei benachbarte Speichenbefestigungsöffnungen ihre Schlitze in Richtung gegenüberliegender seitlicher Richtungen offen aufweisen.

8. Fahrradradfelge nach einem der vorhergehenden Ansprüche, wobei die Felge (1) aus einem geformten Verbundwerkstoff gefertigt ist, insbesondere einem kohlefaserverstärkten Material.

9. Fahrradrad umfassend:
- eine zentrale Nabe (8) mit Flanschen (8', 8") mit mehreren Speichenbefestigungsöffnungen (25) darin;
- eine Fahrradradfelge (1) nach einem der vorhergehenden Ansprüche, wobei ihre Speichen (10) die Nabe (8) und die Felge (1) miteinander verbinden; und
mehrere Nippel zum Bereitstellen einer Einstellung einer Spannung in den Speichen (10).

10. Fahrrad umfassend mindestens eine Fahrradradfelge (1) nach einem der vorhergehenden Ansprüche.

## Revendications

1. Jante (1) pour vélo ayant un axe de rotation central (7), comprenant :
une paroi avec deux parties de paroi latérale annulaires s'étendant radialement vers l'extérieur (2a, 2b) ;
une pluralité d'ouvertures de montage de rayon dans la paroi ;
une pluralité de rayons (10) destinés à raccorder la jante (1) avec un moyeu central (8) ;
dans laquelle les rayons (10) comprennent une tige (11) avec une tête (12) au niveau de son extrémité radialement externe, laquelle tête (12) a une section transversale plus importante que la tige (11) ;
dans laquelle les parties de paroi de la jante (1) qui délimitent les ouvertures de montage de rayon, forment des sièges pour les têtes (12) des rayons (10) afin de venir en butée contre ces derniers, alors que les tiges de rayon (11) s'étendent à travers les ouvertures dans la direction dudit axe central (7),
au moins l'une des ouvertures de montage de rayon est formée par une fente,
ladite fente s'étend à la fois dans une direction latérale et radialement externe (X resp. Y) et comprend une première partie de fente (15) et une seconde partie de fente (16) dans laquelle la première partie de fente (15) a des dimensions transversales entre les dimensions transversales de la tige (11) et de la tête (12), et la seconde partie de fente (16) a des dimensions transversales supérieures aux dimensions transversales de la tête (12),
dans laquelle la seconde partie de fente (16) se trouve plus radialement vers l'extérieur que la première partie de fente (15), et dans laquelle les parties de fente (15, 16) sont toutes deux ouvertes dans la direction de l'axe central (7) de la jante (1) dans la direction d'au moins l'une des parties de paroi latérale (2a, 2b) de la jante (1),
**caractérisée en ce que** :
lesdites parties de paroi de la jante (1) sont prévues avec des parties de paroi de renforcement (20, 21) qui délimitent les parties de fente (15, 16) vers un espace annulaire interne (5) de la jante (1).

2. Jante pour vélo selon la revendication 1, dans laquelle les parties de paroi de renforcement (20, 21) qui délimitent les parties de fente (15, 16) vers l'espace annulaire interne (5), forment une poche fermée dans la paroi de jante.

3. Jante pour vélo selon la revendication 1 ou 2, dans laquelle les parties de paroi de renforcement (20, 21), qui délimitent les parties de fente (15, 16) vers l'espace annulaire interne (5) sont fabriquées de manière solidaire avec la paroi de jante.

4. Jante pour vélo selon l'une des revendications précédentes, dans laquelle les parties de paroi de renforcement (20, 21) qui délimitent les parties de fente (15, 16), comprennent des parties de paroi de renforcement droites (20', 20") s'étendant dans la direction radiale (Y) et se trouvant sur les parties de paroi de renforcement (21', 21") s'étendant dans la direction latérale (X).

5. Jante pour vélo selon l'une des revendications précédentes, dans laquelle la seconde partie de fente (16) s'étend complètement dans la direction latérale (X) et a des parties de paroi (21') délimitant son côté radialement interne formant le siège (23) pour la tête (12) du rayon (10) afin de venir en butée contre ce dernier, alors que la tige de rayon (11) s'étend à travers la première partie de fente (15) dans la direction dudit axe central (7).

6. Jante pour vélo selon l'une des revendications précédentes, dans laquelle la fente qui est ouverte dans la direction d'au moins l'une des parties de paroi latérale (2a, 2b) de la jante (1), est ouverte dans une direction latérale perpendiculaire aux parties de paroi latérale (2a, 2b).

7. Jante pour vélo selon l'une des revendications précédentes, dans laquelle des ouvertures de montage de rayon adjacentes ayant leurs fentes ouvertes vers les directions latérales opposées.

8. Jante pour vélo selon l'une des revendications précédentes, dans laquelle la jante (1) est réalisée avec un matériau composite moulé, en particulier un matériau renforcé en fibres de carbone.

9. Roue de vélo comprenant :
un moyeu central (8) ayant des brides (8', 8") avec une pluralité d'ouvertures de montage de rayon (25) à l'intérieur de ces dernières ;
une jante (1) pour vélo selon l'une des revendications précédentes, ayant ses rayons (10) qui raccordent le moyeu (8) et la jante (1) l'un à l'autre ; et
une pluralité d'écrous de rayon pour fournir l'ajustement de tension des rayons (10).

10. Vélo comprenant au moins une jante (1) pour vélo selon l'une des revendications précédentes.
